Europäisches Patentamt

**European Patent Office**

Office européen des brevets

(11) Veröffentlichungsnummer: **0 077 475**

**A2**

(12) **EUROPÄISCHE PATENTANMELDUNG**

(21) Anmeldenummer: **82108897.8**

(22) Anmeldetag: **25.09.82**

(51) Int. Cl.³: **C 01 F 11/46**

(30) Priorität: **03.10.81 DE 3139384**

(43) Veröffentlichungstag der Anmeldung:
**27.04.83 Patentblatt 83/17**

(84) Benannte Vertragsstaaten:
**AT CH DE FR GB IT LI LU NL SE**

(71) Anmelder: **Salzgitter Maschinen und Anlagen Aktiengesellschaft Windmühlenbergstrasse 20-22 D-3320 Salzgitter 51(DE)**

(72) Erfinder: **Schmidt, Hans Neuroder Strasse 19 D-3381 Heimerode(DE)**

(74) Vertreter: **Kosel, Peter, Dipl.-Ing. et al, Patentanwälte Dipl.-Ing. Horst Röse Dipl.-Ing. Peter Kosel Postfach 129 Odastrasse 4a D-3353 Bad Gandersheim(DE)**

(54) **Verfahren und Vorrichtung zur drucklosen Herstellung von Alpha-Calciumsulfat-Halbhydrat.**

(57) Bei der drucklosen Calcinierung von Calciumsulfat-Dihydrat in Dispersion mit einem Calciniermedium zu α-Calciumsulfat-Halbhydrat wird die Dispersion kontinuierlich hergestellt und in voneinander getrennte Dispersionsteilmengen (18) aufgeteilt, die nacheinander entlang einem Calcinierungsweg (19) transportiert werden. Die Transportgeschwindigkeit kann variiert werden. Längs dem Calcinierungsweg (19) kann die Temperatur der Dispersionsteilmengen (18) verändert werden. Längs dem Calcinierungsweg (19) kann auch die Konzentration des Calciniermediums durch örtliche Zugabe höher konzentrierten Calciniermediums erhöht werden. Es kann auch das Verhältnis von Calciumsulfat-Hydrat zu Calciniermedium durch örtliche Zugaben von Calciniermedium auf einen gewünschten Wert eingestellt werden. Die Dispersionsteilmengen (18) lassen sich durch eine Teil- und Transportvorrichtung (2) herstellen und handhaben, die vorzugsweise eine Wendel (3;32;48;52) aufweist.

FIG.1

0077475

Unsere Akten-Nr.: 1774/863 EP   Bad Gandersheim, 24. September 1982

01 Salzgitter Maschinen und
   Anlagen Aktiengesellschaft

## Verfahren und Vorrichtung zur drucklosen Herstellung von $\alpha$ -Calciumsulfat-Halbhydrat

Die Erfindung betrifft ein Verfahren zu drucklosen Calcinierung von als Nebenprodukt erhaltenem und/oder mineralischem Calciumsulfat-Dihydrat in Dispersion mit einem Calciniermedium, z.B. Schwefelsäure und/oder geeigneten Salzlösungen, in einem beheizten Calcinierungsraum zu $\alpha$ - Calciumsulfat-Halbhydrat.

Ein bekanntes Verfahren dieser Art (DE-AS 1 274 488) ist auf die Herstellung eines $\alpha$ -Calciumsulfat-Halbhydrats von ausreichender Reinheit aus einem als Nebenprodukt erhaltenen Calciumsulfat-Dihydrat gerichtet.

Aus der GB-Patentschrift 1 125 989 ist es an sich bekannt, $\alpha$ -Calciumsulfat-Halbhydrat kontinuierlich im Wasserverfahren unter Überdruck herzustellen. Dazu werden wenigstens zwei umlaufende, vom Einlaßende zum Auslaßende hin nach unten geneigte, rohrförmige Druckkammern verwendet. Je zwei benachbarte Druckkammern sind druckdicht durch einen Zwischenspeichertank mit auslaßseitiger Dispersionspumpe miteinander verbunden. Jede Druckkammer weist Ein-

- 2 -
PK/Es

bauten in Form von Rippen und Prallblechen (ridges or baffles) auf, deren Höhe, Winkel oder Anordnung einen Einfluß auf den Durchgang der Dispersion durch die Druckkammer hat. Bei dieser Anlage sind der bauliche und der Betriebsaufwand verhältnismäßig hoch. Man kann auf die Dispersion in der Druckkammer nicht örtlich einwirken. Die Dispersion ist in den Druckkammern nicht unterteilbar, so daß eine Vermischung von Calciumsulfat-Di- und -Halbhydrat nicht zu vermeiden ist.

Der Erfindung liegt die Aufgabe zugrunde, das eingangs erwähnte Verfahren kontinuierlich zu führen und zu verbessern und im Ablauf des Verfahrens Art und Ort der Einwirkung auf die Dispersion zu optimieren.

Diese Aufgabe ist durch die im Kennzeichnungsteil des Anspruchs 1 angegebenen Schritte gelöst. Es kann z.B. als Nebenprodukt erhaltener Rauchgasentschwefelungsgips oder Chemiegips verarbeitet werden. Die Unterteilung in Dispersionsteilmengen gestattet eine optimale Reaktion der und Einflußnahme auf die Dispersionsteilmengen entlang dem Calcinierungsweg.

Die Merkmale des Anspruchs 2 gestatten eine einfache Einflußnahme auf die Calcinierungsdauer. Vorzugsweise ist die Transportgeschwindigkeit und damit die Aufenthaltsdauer der Dispersion in dem Calcinierungsraum stufenlos einstellbar.

Die Merkmale des Anspruchs 3 ermöglichen eine Differenzierung der Calcinierungsdauer der Dispersionsteilmengen.

Gemäß Anspruch 4 läßt sich eine beliebig feinfühlige Temperaturführung der Dispersionsteilmengen erreichen.

Gemäß Anspruch 5 kann gegengesteuert werden, wenn durch Ausscheidung von Kristallwasser längs dem Calcinierungsweg eine zu hohe Verdünnung des Calciniermediums eintritt.

Die Merkmale des Anspruchs 6 gestatten es, die Viskosität der Dispersionsteilmengen stets optimal zu halten.

Das Rühren gemäß Anspruch 7 beschleunigt und verbessert den Ablauf der Reaktion.

Insgesamt kann mittels des erfindungsgemäßen Verfahrens die Prozeßführung dem idealen Calcinierungsverlauf optimal angepaßt werden. Der kontinuierliche Verfahrensablauf erleichtert die Prozeßautomatisierung und ermöglicht eine Vergleichmäßigung der Qualität und gesteigerte Wirtschaftlichkeit der Calcinierung.

Die zugrundeliegende Aufgabe ist auch durch die erfindungsgemäße Vorrichtung gemäß Anspruch 8 gelöst.

Die Wendel gemäß Anspruch 9 erweist sich als besonders einfache Teil- und Transportvorrichtung von hoher Funktionssicherheit. Auf einfache Weise ist eine vielfältige Einflußnahme auf die Dispersionsteilmengen auf dem Calcinierungsweg ermöglicht. Vorzugsweise ist die Welle "trocken" gelagert, wobei der Spiegel der Dispersion unter einer Lagerunterkante steht.

Die Ausbildung der Vorrichtung gemäß Anspruch 10 ist besonders einfach und wartungsfrei und mindert aufgrund der nur örtlichen Gleitberührung den Verschleiß.

Mit den Heizkammern gemäß Anspruch 11 läßt sich eine beliebig feinfühlige Temperaturführung des Prozesses erreichen. Das Heizmedium kann flüssig, aber auch gasförmig, z.B. Rauchgas oder Abdampf, sein. Im Fall einer Automatisierung der Beaufschlagung der Heizkammern mit Heizmedium ist zweckmäßigerweise jeder Heizkammer ein Temperaturfühler zugeordnet, der mit einer an sich bekannten Steuer- oder Regelschaltung verknüpft ist und für die gewünschte differenzierte Beaufschlagung mit Heizmedium sorgt.

Mit ähnlichem Ziel kann gemäß Anspruch 12 durch die Einlaßöffnungen gasförmiges Heizmedium unmittelbar in die betreffenden Dispersionsteilmengen eingebracht werden.

Die Merkmale des Anspruchs 13 gestatten die Aufrechterhaltung einer gewünschten Viskosität der Dispersion und/oder einer gewünschten Konzentration des Calciniermediums. Vorzugsweise geschieht die Beaufschlagung der Einlaßöffnungen dosiert.

Das Wehr gemäß Anspruch 14 erhält auch bei gelegentlichem Stillstand der Teil- und Transportvorrichtung einen gleichmäßigen Spiegel der Dispersion in dem Calcinierungsraum aufrecht.

Das gemäß Anspruch 15 umgebogene Wendelende räumt das fertige $\alpha$ -Calciumsulfat-Halbhydrat vollständig aus dem Bereich des Wehrs aus.

Die Trommel und die Wendel gemäß Anspruch 16 bieten einen absolut flüssigkeitsdichten Abschluß der einzelnen Dispersionsteilmengen gegeneinander. Die Trommel kann z.B. auf Rollenpaaren gelagert und durch diese drehend antreibbar sein.

Anspruch 17 ermöglicht die gewünschten Zugaben ohne Durchbrechung des Trommelmantels.

Anspruch 18 ermöglicht auch bei der Trommel eine zonenweise differenzierte Beheizung der Dispersionsteilmengen.

Die Eingabeeinrichtung kann für das Calcuimsulfat-Dihydrat und das Calciniermedium je eine Dosiervorrichtung und einen den Dosiervorrichtungen nachgeschalteten Mischer aufweisen, dessen Ausgang in den Calcinierungsraum mündet. Das begünstigt den Prozeßablauf insofern, als schon fertige Dispersion in den Calcinierungsraum eingegeben werden kann. Als Dosiervorrichtung kann z.B. eine Zellenradschleuse oder eine Dosierpumpe verwendet werden.

Die Eingabeeinrichtung kann auch für das Calciumsulfat-Dihydrat und das Calciniermedium je eine Dosiervorrichtung aufweisen, deren Ausgänge jeweils in den Calcinierungsraum münden. Das bringt Vorteile insofern, als auf einen gesonderten Mischer verzichtet und die Mischung im Calcinierungsraum selbst vorgenommen werden kann.

Die Rührelemente gemäß Anspruch 19 werden vorzugsweise entlang dem Calcinierungsweg dort angebracht, wo bereits

überwiegend $\alpha$ -Calciumsulfat-Halbhydrat vorliegt, das kaum noch Neigung zu "scaling und clogging" zeigt. So können unerwünschte Aufbauten auf den Rührelementen und Brückenbildungen an der Wendel vermieden werden.

Die Rührelemente gemäß Anspruch 20 sind konstruktiv besonders einfach und dennoch sehr wirksam.

Die Ausbildung der Teil- und Transportvorrichtung gemäß Anspruch 21 ist wegen ihrer konstruktiven und baulichen Einfachheit bevorzugt.

Die Verjüngungen gemäß den Ansprüchen 22 und 23 dienen der zunehmenden Beschleunigung der Dispersionsteilmengen in Richtung des Calcinierungswegs.

Die Maßnahmen gemäß Anspruch 24 bieten betriebliche Vorteile.

Die Erfindung wird nachfolgend anhand der in den Zeichnungen dargestellten Ausführungsbeispiele näher erläutert. Es zeigen:

Fig. 1 einen Längsschnitt durch eine Calciniervorrichtung mit einer in einem Gefäß drehbar gelagerten Wendel,

Fig. 2 die Schnittansicht nach Linie 2-2 in Fig. 1,

Fig. 3 einen Längsschnitt durch eine andere Calciniervorrichtung mit einer in einer umlaufenden Trommel befestigten Wendel,

Fig. 4 die Schnittansicht nach Linie 4-4 in Fig. 3,

Fig. 5 eine schematische Darstellung einer Eingabeeinrichtung,

Fig. 6 eine schematische Darstellung einer anderen Eingabeeinrichtung,

Fig. 7 einen Längsschnitt durch eine weitere Calciniervorrichtung mit sich am Auslaßende verjüngender Wendel und

Fig. 8 einen Längsschnitt durch eine weitere Calciniervorrichtung mit sich über die ganze Länge zum Auslaßende hin verjüngender Wendel.

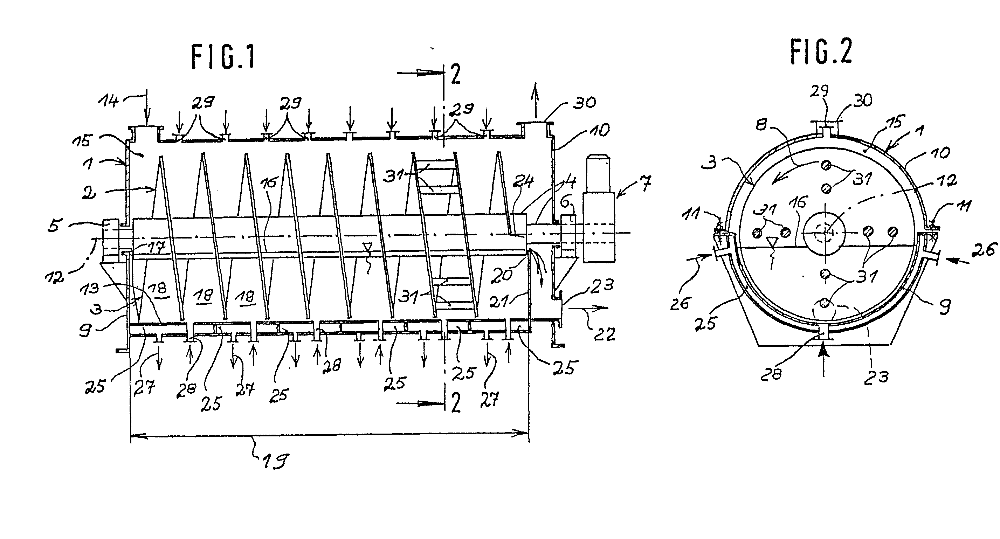

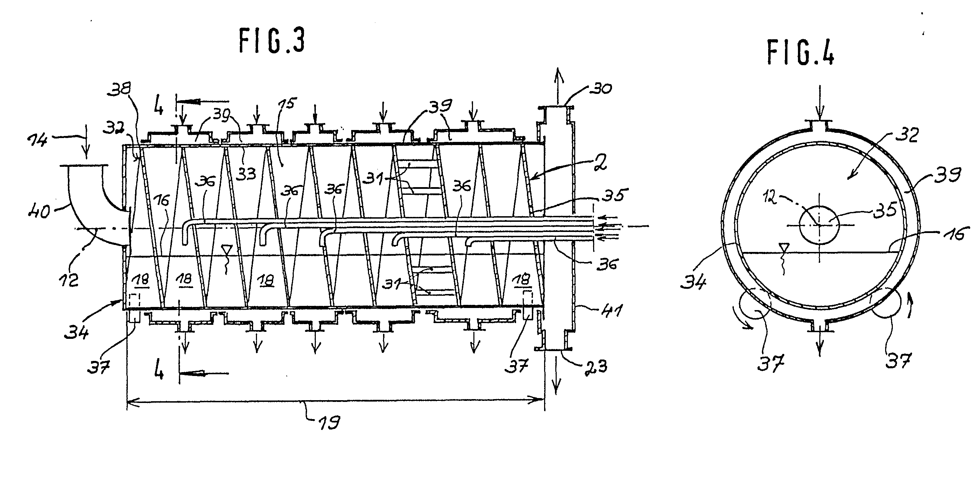

Fig. 1 zeigt eine Calciniervorrichtung, bei der in einem stationären Gefäß 1 eine Teil- und Transportvorrichtung 2 angeordnet ist. Die Teil- und Transportvorrichtung 2 weist eine zylindrische Wendel 3 auf, die mittels einer Welle 4 in außerhalb des Gefäßes 1 angebrachten Lagern 5 und 6 drehbar gelagert und durch einen Antrieb 7 antreibbar ist. Der Antrieb 7 ist als in der Drehzahl stufenlos einstellbarer Getriebemotor ausgebildet. Die Umlaufrichtung der Wendel 3 ist in Fig. 2 durch einen Pfeil 8 angedeutet.

Das Gefäß 1 ist aus einer unteren Halbschale 9 und einer oberen Halbschale 10 aufgebaut, die gemäß Fig. 2 längs Flanschen mit Schrauben 11 in einer Ebene miteinander verbunden sind, die durch eine Längsachse 12 der Wendel 3 verläuft.

Die Wendel 3 steht in zumindest annähernd dichtender Gleitberührung mit einer Innenwand 13 des Gefäßes 1 im Bereich der unteren Halbschale 9. Wie besonders Fig. 2 zeigt, befindet sich dagegen die obere Halbschale 10 in einem radialen Abstand von der Wendel 3.

Eine Dispersion aus Calciumsulfat-Dihydrat und einem Calciniermedium wird in Richtung eines Pfeiles 14 in einen Calcinierungsraum 15 im Inneren des Gefäßes 1 eingebracht und steht darin bis zu einem Spiegel 16, der unterhalb einer Unterkante 17 des durch das Gefäß 1 hindurchgeführten Teiles der Welle 4 verläuft. So ist auch ohne flüssigkeitsdichte Abdichtung der Welle 4 gegenüber dem Gefäß 1 gewährleistet, daß Dispersion nicht aus dem Gefäß 1 austreten kann.

Die jeweils unten liegenden Gänge der Wendel 3 unterteilen die in dem Gefäß 1 stehende Dispersion in Dispersionsteilmengen 18 von gleich großem Volumen, da die Steigung der Gänge der Wendel 3 in diesem Fall konstant ist. Die Dispersionsteilmengen 18 werden nacheinander entlang einem Calcinierungsweg 19 in Fig. 1 von links nach rechts transportiert, bis schließlich das fertige $\alpha$-Calciumsulfat-Halbhydrat über eine Überlaufkante 20 eines Wehrs 21 des Gefäßes 1 strömt und in Richtung eines Pfeiles 22 aus einem Auslaß 23 des Gefäßes 1 ausgetragen wird. Ein mit dem Wehr 21 zusammenwirkendes Ende 24 der Wendel 3 ist zum Wehr 21 hin umgebogen und ermöglicht damit einen vollständigen Aushub des fertigen α-Calciumsulfat-Halbhydrats aus dem an das Wehr 21 angrenzenden Raum.

Aus den Fig. 1 und 2 ist ersichtlich, daß die durch die untere Halbschale 9 definierte Innenwand 13 des Gefäßes 1 durch parallel zu der Welle 4 aufeinander folgende Heizkammern 25 beheizbar ist.

Die halbzylindrischen Heizkammern 25 können unabhängig voneinander gesteuert oder geregelt mit einem Heizmedium beaufschlagt werden, das gemäß Fig. 2 in Richtung von Pfeilen 26 in die Heizkammern 25 eingeleitet und am tiefsten Punkt jeder Heizkammer 25 in Richtung eines Pfeiles 27 ausgelassen wird.

Der mit den Dispersionsteilmengen 18 in Berührung tretende Teil der Innenwand 13 weist über den Calcinierungsweg 19 verteilte Einlaßöffnungen 28 für ein gasförmiges Heizmedium auf. Die Einlaßöffnungen 28 können unabhängig voneinander gesteuert oder geregelt mit dem Heizmedium beaufschlagt werden.

Die Innenwand 13 weist im obersten Bereich in der oberen Halbschale 10 über den Calcinierungsweg 19 verteilte Einlaßöffnungen 29 auf, die unabhängig voneinander gesteuert oder geregelt mit Calciniermedium beaufschlagbar sind.

Am Auslaßende des Gefäßes 1 ist ferner oben in der oberen Halbschale 10 eine Aspiration 30 vorgesehen, durch die Wasserdampf aus dem Calcinierungsraum 15 abgesaugt werden kann.

Auf dem letzten Teil des Calcinierungswegs 19 sind zwischen benachbarten Wendelgängen Rührstege 31 befestigt.

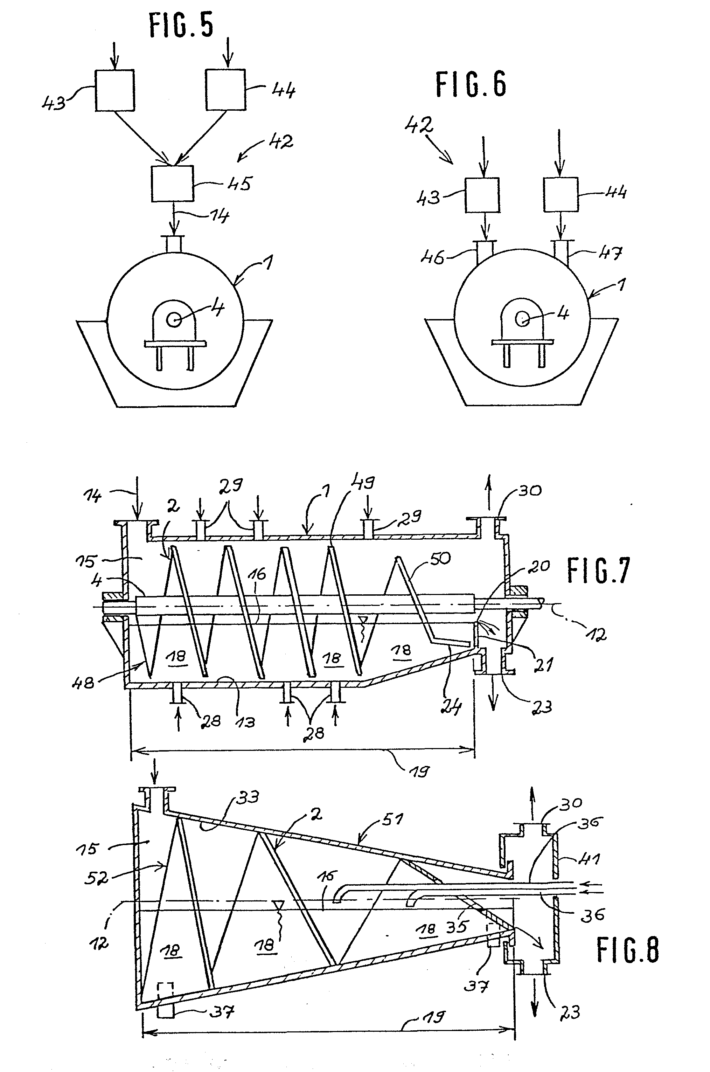

Bei dem in den Fig. 3 und 4 dargestellten Ausführungsbeispiel sind gleiche Teile wie in den Fig. 1 und 2 mit gleichen Bezugszahlen versehen. Die Teil- und Transportvorrichtung 2 ist in diesem Fall als zylindrische Wendel 32 ausgebildet, die mit ihrer Außenkante an einer Innenwand 33 einer den Calcinierungsraum 15 umschließenden, drehend antreibbaren Trommel 34 flüssigkeitsdicht befestigt ist. Die Wendel 32 weist eine mittige axiale Durchbrechung 35 auf, durch die sich Fig. 3 von rechts außerhalb der Trommel 34 Zuleitungen 36 für ein gasförmiges Heizmedium und/oder Calciniermedium an vorbestimmte Stellen des Calcinierungswegs 19 erstrecken.

Die Trommel 34 ist auf zwei Paaren von Rollen 37 drehbar gelagert, von denen wenigstens eine in an sich bekannter Weise antreibbar ist.

Eine Außenwand 38 der Trommel 34 ist durch parallel zu der Längsachse 12 aufeinanderfolgende, stationäre Heizkammern 39 beheizbar, wobei jede Heizkammer 39 den Umfang der Trommel 34 umschließt und ein Heizmedium oben zugeführt und unten abgeführt wird. Ferner ist ein stationärer Einlaßstutzen 40 für die Dispersion und ein stationäres Gehäuse 41 vorgesehen, das einerseits den Auslaß 23 und andererseits die Aspiration 30 aufweist.

Fig. 5 zeigt eine Eingabeeinrichtung 42 für das Gefäß 1, bei der für das Calciumsulfat-Dihydrat eine Dosiervorrichtung 43 und für das Calciniermedium eine weitere Dosiervorrichtung 44 vorgesehen sind. Die Dosiervorrichtungen 43,44 sind mit einem Mischer 45 verbunden, dessen Ausgang gemäß dem Pfeil 14 die fertige Dispersion in das Gefäß 1 kontinuierlich einspeist.

Fig. 6 stellt eine abgewandelte Ausführungsform insofern dar, als die Dosiervorrichtungen 43,44 jeweils über einen gesonderten Einlaßstutzen 46 und 47 die zugehörige Dispersionskomponente in das Gefäß eingeben und die Vermischung zur Dispersion erst in dem Gefäß 1 durch die Wendel 3 stattfindet.

In den Fig. 7 und 8 sind wiederum gleiche Teile mit gleichen Bezugszahlen versehen.

In Fig. 7 weist die Teil- und Transportvorrichtung 2 in Gestalt einer Wendel 48 einen zylindrischen Anfangsteil 49 und einen sich verjüngenden Endteil 50 auf. In dem Endteil 50 nimmt die Steigung und Teilung der Wendel 48 in Richtung des Calcinierungswegs 19 derart zu, daß in dem gesamten Calcinierungsraum 15 ein zumindest annähernd gleich hoher Spiegel 16 der Dispersion besteht.

In Fig. 8 ist die Teil- und Transportvorrichtung 2 als Innen an einer sich verjüngenden, umlaufenden Trommel 51 befestigte, sich ebenfalls verjüngende Wendel 52 ausgebildet. Auch hier ist durch Anpassung von Steigung und Teilung der Wendel 52 an die zunehmende Verjüngung sichergestellt, daß sich ein gleich hoher Spiegel 16 der Dispersion in dem gesamten Calcinierungsraum 15 hält.

Zur weiteren Erläuterung der Erfindung dient das nachfolgende

Beispiel:

Das Calciniermedium wird vorbereitet, indem die Konzentration der Schwefelsäure und/oder der Salzlösungen mit Wasser eingestellt und auf die benötigte Temperatur vorgeheizt wird.

Die Komponenten werden dosiert, und zwar das Calciumsulfat-Dihydrat mit 25 Gew.-% und das Calciniermedium mit 75 Gew.-%.

Das Calciumsulfat-Dihydrat wird im Calciniermedium dispergiert.

Im Einlaufbereich der Calciniervorrichtung erfolgt die Unterteilung der Dispersion in Dispersionsteilmengen.

In der Calciniervorrichtung werden die Dispersionsteilmengen entlang dem Calcinierungsweg durch eine Wendel zwangsweise geführt.

Im ersten Drittel des Calcinierungswegs beginnt die Kristallwasserausscheidung.

Im zweiten Drittel des Calcinierungswegs werden die Dispersionsteilmengen über den Siedepunkt des Wassers aufgeheizt und etwa die Menge des ausgeschiedenen Kristallwassers verdampft. Zur Konzentrationsregulierung des Caciniermediums wird insbesondere in dieser Zone des Calcinierungswegs mehr oder weniger konzentrierte Schwefelsäure und/oder Salzlösung hinzugegeben.

Im letzten Drittel des Calcinierungswegs wird die Calcinierung vervollständigt, unter zusätzlichem Rühren der Dispersionsteilmengen mittels Rührstegen zwischen den Wendelgängen.

Patentanwälte
Dipl.-Ing. Horst Röse
Dipl.-Ing. Peter Kosel

0077475

DIPL.-ING. HORST RÖSE     DIPL.-ING. PETER KOSEL
PATENTANWÄLTE

Unsere Akten-Nr.: 1774/863EP     Bad Gandersheim, 24. September 1982

01 Salzgitter Mschinen und
   Anlagen Aktiengesellschaft

PATENTANSPRÜCHE

1. Verfahren zur drucklosen Calcinierung von als Nebenprodukt erhaltenem und/oder mineralischem Calciumsulfat-Dihydrat in Dispersion mit einem Calciniermedium, z.B. Schwefelsäure und/oder geeigneten Salzlösungen, in einem beheizten Calcinierungsraum zu ∝ -Calciumsulfat-Halbhydrat, dadurch gekennzeichnet, daß die Dispersion kontinuierlich hergestellt und in dem Calcinierungsraum in voneinander zumindest annähernd getrennte Dispersionsteilmengen aufgeteilt wird, und daß die Dispersionsteilmengen nacheinander entlang einem Calcinierungsweg transportiert werden.

2. Verfahren nach Anspruch 1, dadurch gekennzeichnet, daß die Dispersionsteilmengen über den Calcinierungsweg mit konstanter, aber in der Größe einstellbarer Transportgeschwindigkeit transportiert werden.

3. Verfahren nach Anspruch 1, dadurch gekennzeichnet, daß die Dispersionsteilmengen zumindest in einem Endteil des Calcinierungswegs mit zunehmender Transportgeschwindig-keit transportiert werden.

- 2 -
PK/Es

4. Verfahren nach einem der Ansprüche 1 bis 3, dadurch gekennzeichnet, daß die Temperatur der Dispersionsteilmengen längs dem Calcinierungsweg verändert wird.

5. Verfahren nach einem der Ansprüche 1 bis 4, dadurch gekennzeichnet, daß längs dem Calcinierungsweg die Konzentration des Calciniermediums durch örtliche Zugabe höher konzentrierten Calciniermediums in eine oder in einige der Dispersionsteilmengen auf einen technologisch jeweils optimalen Wert erhöht wird.

6. Verfahren nach einem der Ansprüche 1 bis 5, dadurch gekennzeichnet, daß längs dem Calcinierungsweg das Verhältnis von Calciumsulfat-Dihydrat oder Calciumsulfat-Halbhydrat zu Calciniermedium durch örtliche Zugabe von Calciniermedium in eine oder in einige der Dispersionsteilmengen auf einen gewünschten Wert eingestellt wird.

7. Verfahren nach einem der Ansprüche 1 bis 6, dadurch gekennzeichnet, daß zumindest in der Nähe des Endes des Calcinierungswegs jede Dispersionsteilmenge gerührt wird.

8. Vorrichtung zur Durchführung des Verfahrens gemäß einem der Ansprüche 1 bis 7, dadurch gekennzeichnet, daß die Dispersion durch eine Eingabeeinrichtung (42) kontinuierlich in dem Calcinierungsraum (15) bereitstellbar ist, und daß in dem Calcinierungsraum (15) eine die Dispersion in Dispersionsteilmengen (18) unterteilende und die Dispersionsteilmengen (18) durch den Calcinierungsraum (15) transportierende Teil- und Transportvorrichtung (2) angeordnet ist.

9. Vorrichtung nach Anspruch 8, dadurch gekennzeichnet, daß die Teil- und Transportvorrichtung (2) eine drehend antreibbare Wendel (3;32;48;52) aufweist, daß die Wendel (3;48) an einer in einem stationären, den Calcinierungsraum (15) umschließenden Gefäß (1) gelagerten Welle (4) befestigt ist, und daß die Wendel (3;48) in zumindest annähernd dichtender Gleitberührung mit einer Innenwand (13) des Gefäßes (1) steht.

10. Vorrichtung nach Anspruch 9, dadurch gekennzeichnet, daß die Gleitberührung nur mit einem unteren Teil der Innenwand (13) bis oberhalb eines Spiegels (16) der Dispersion besteht.

11. Vorrichtung nach Anspruch 9 oder 10, dadurch gekennzeichnet, daß zumindest ein mit der Dispersion in Berührung tretender Teil der Innenwand (13) durch in oder außerhalb einer Wand des Gefäßes (1) angeordnete, parallel zu der Welle (4) aufeinanderfolgende Heizkammern (25) beheizbar ist, wobei zur Erzielung einer über den Calcinierungsweg (19) differenzierten Heizwirkung die einzelnen Heizkammern (25) unabhängig voneinander gesteuert oder geregelt mit einem Heizmedium beaufschlagbar sind.

12. Vorrichtung nach einem der Ansprüche 9 bis 11, dadurch gekennzeichnet, daß ein mit der Dispersion in Berührung tretender Teil der Innenwand (13) über den Calcinierungsweg (19) verteilte Einlaßöffnungen (28) für ein gasförmiges Heizmedium aufweist, wobei zur Erzielung einer über den Calcinierungsweg (19) differenzierten Heizwirkung die einzelnen Einlaßöffnungen (28) unabhängig voneinander gesteuert oder geregelt mit dem Heizmedium beaufschlagbar sind.

13. Vorrichtung nach einem der Ansprüche 9 bis 12, dadurch gekennzeichnet, daß die Innenwand (13) vorzugsweise oberhalb eines Spiegels (16) der Dispersion, über den Calcinierungsweg (19) verteilte Einlaßöffnungen (29) für Calciniermedium aufweist, wobei die einzelnen Einlaßöffnungen (29) unabhängig voneinander gesteuert oder geregelt mit dem Calciniermedium beaufschlagbar sind.

14. Vorrichtung nach einem der Ansprüche 8 bis 13, dadurch gekennzeichnet, daß in dem Calcinierungsraum (15) am Ende des Calcinierungswegs (19) ein Wehr (21) mit einer Überlaufkante (20) für das α-Calciumsulfat-Halbhydrat an dem Gefäß (1) flüssigkeitsdicht befestigt ist.

15. Vorrichtung nach Anspruch 14, dadurch gekennzeichnet, daß ein mit dem Wehr (21) zusammenwirkendes Ende (24) der Wendel (3;48) zum Wehr (21) hin umgebogen ist.

16. Vorrichtung nach Anspruch 8, dadurch gekennzeichnet, daß die Teil- und Transportvorrichtung (2) eine drehend antreibbare Wendel (32;52) aufweist, und daß die Wendel (32;52) an einer Innenwand (33) einer den Calcinierungsraum (15) umschließenden, drehend antreibbaren Trommel (34;51) flüssigkeitsdicht befestigt ist.

17. Vorrichtung nach Anspruch 16, dadurch gekennzeichnet, daß die Wendel (32;52) eine mittige axiale Durchbrechung (35) aufweist, durch die sich von außerhalb der Trommel (34;51) Zuleitungen (36) für ein gasförmiges Heizmedium und/oder Calciniermedium an vorbestimmte Stellen des Calcinierungswegs (19) erstrecken.

18. Vorrichtung nach Anspruch 16 oder 17, dadurch gekennzeichnet, daß eine Außenwand (38) der Trommel (34) durch parallel zu einer Längsachse (12) der Trommel (34) aufeinanderfolgende, stationäre Heizkammern (39) beheizbar ist, wobei jede Heizkammer (39) den Umfang der Trommel (34) ganz oder teilweise umschließt, und wobei zur Erzielung einer über den Calcinierungsweg (19) differenzierten Heizwirkung die einzelnen Heizkammern (39) unabhängig voneinander gesteuert oder geregelt mit einem Heizmedium beaufschlagbar sind.

19. Vorrichtung nach einem der Ansprüche 9 bis 18, dadurch gekennzeichnet, daß die Wendel (3;32) zumindest längs einem Teil des Calcinierungswegs (19) mit Rührelementen versehen ist.

20. Vorrichtung nach Anspruch 19, dadurch gekennzeichnet, daß die Rührelemente als parallel zu einer Längsachse (12) der Wendel (3;32) zwischen benachbarten Wendelgängen befestigte Rührstege (31) ausgebildet sind.

21. Vorrichtung nach einem der Ansprüche 8 bis 20, dadurch gekennzeichnet, daß die Teil- und Transportvorrichtung (2) zylindrisch ausgebildet ist.

22. Vorrichtung nach einem der Ansprüche 8 bis 20, dadurch gekennzeichnet, daß die Teil- und Transportvorrichtung (2) einen zylindrischen Anfangsteil (49) und einen sich verjüngenden Endteil (50) aufweist.

23. Vorrichtung nach einem der Ansprüche 8 bis 20, dadurch gekennzeichnet, daß die Teil- und Transportvorrichtung (2) sich von einem Eingabeende bis zu einem Auslaßende verjüngt.

24. Vorrichtung nach Anspruch 22 oder 23, dadurch gekennzeichnet, daß die Steigung und Teilung der Wendel

01  (48;52) im Bereich der Verjüngung in Richtung des Calcinierungswegs (19) derart zunehmen, daß in dem gesamten
Calcinierungsraum (15) ein zumindest annährend gleich
hoher Spiegel (16) der Dispersion besteht.

Patentanwälte
Dipl.-Ing. Horst Röse
Dipl.-Ing. Peter Kosel

FIG.2

FIG.1

FIG.4

FIG.3

**FIG.5**

**FIG.6**

**FIG.7**

**FIG.8**